# FASCICULE DE BREVET EUROPEEN

(11) **EP 3 434 936 B1**
(45) Date de publication et mention de la délivrance du brevet: **14.04.2021**
(21) Numéro de dépôt: 17182827.0
(22) Date de dépôt: 24.07.2017
(51) Int. Cl.: F16H 59/04, F16H 61/18

(54) **LEVIER DE COMMANDE D'UNE BOITE DE VITESSES MECANIQUES AVEC SYSTEME DE VERROUILLAGE DU RAPPORT DE MARCHE ARRIERE**
STEUERHEBEL EINES MECHANISCHEN GETRIEBES MIT EINEM SPERRSYSTEM DES RÜCKWÄRTSGANGS
LEVER FOR CONTROLLING A MECHANICAL GEARBOX WITH SYSTEM FOR LOCKING THE REVERSE GEAR

(43) Date de publication de la demande: 30.01.2019
(73) Titulaire: DURA Automotive Holdings U.K., Ltd., Birmingham, B35 7AG (GB)
(72) Inventeur: HOUPERT, Mathieu, 92140 Clamart (FR); MORVAN, Fabrice, 91600 Savigngy sur Orge (FR)
(74) Mandataire: Cabinet Laurent & Charras

(56) Documents cités:
- EP-A1- 1 571 376
- WO-A1-96/39592
- DE-A1-102012 008 026
- FR-A1- 2 748 079

## Description

### DOMAINE TECHNIQUE

L'invention se rattache au secteur technique des boîtes de vitesses mécaniques, c'est-à-dire à commande manuelle, pour véhicules automobiles.

Plus particulièrement, l'invention concerne un levier de commande d'une boîte de vitesses mécaniques équipées d'un système de verrouillage du rapport de marche arrière.

### ART ANTERIEUR

Dans l'état de la technique, il est connu un levier de commande monté pivotant autour d'une articulation dans une boîte de vitesses mécaniques d'un véhicule automobile à cinq rapports, dont un rapport de marche arrière situé dans un même couloir qu'un rapport de cinquième vitesse.

Le document EP 1571376 A1 montre les caractéristiques suivantes de la revendication 1: Levier de commande monté pivotant autour d'une articulation dans une boîte de vitesses mécaniques d'un véhicule automobile à cinq rapports, dont un rapport de marche arrière situé dans un même couloir qu'un rapport de cinquième vitesse, où le levier comprend un doigt disposé entre l'articulation et une extrémité opposée du levier, le doigt étant destiné à s'engager dans une lumière lorsque ledit levier est pivoté pour sélectionner le couloir de la cinquième vitesse et de la marche arrière, le doigt est déplaçable le long du levier et la lumière définit une piste étagée autorisant :
- soit le pivotement du levier pour passer la cinquième vitesse;
- soit le déplacement du doigt le long du levier pour permettre au doigt de franchir l'étage de la piste et permettre le pivotement du levier pour passer la marche arrière.

L'inconvénient de ce type de levier et boîte de vitesse réside dans le fait que lorsqu'un conducteur est habitué à conduire un véhicule comprenant une boîte de vitesses à six rapports, il arrive parfois que ledit conducteur tente de passer la marche arrière croyant passer la sixième vitesse.

Afin de remédier à cet inconvénient, il est connu de l'état de la technique un levier de commande articulé dans une boîte de vitesses mécaniques, équipé d'un système de verrouillage de la marche arrière, par exemple sous la forme d'une gâchette actionnable à la main.

Cette gâchette permet, par exemple, de tirer sur un câble qui déverrouille un taquet présent à l'intérieur de la boîte de vitesses. Ce système est complexe et ne permet pas d'interdire l'actionnement de la gâchette lorsque le levier se trouve en position de cinquième vitesse.

Selon un autre exemple, la gâchette permet de faire coulisser un doigt assujetti au levier pour franchir un obstacle et autoriser le pivotement du levier en direction de la marche arrière.

Cependant, il s'avère toujours que la gâchette peut être actionnée lorsque le levier se trouve en position de cinquième vitesse.

D'autres inconvénients ressortent de l'état de la technique, notamment la complexité, la fiabilité, l'encombrement et le nombre de pièces mis en œuvre.

### EXPOSE DE L'INVENTION

L'un des buts de l'invention est donc de remédier aux inconvénients de l'art antérieur en proposant un levier de commande dans une boîte de vitesses mécaniques permettant d'interdire à un conducteur de passer la marche arrière en croyant passer la sixième vitesse.

Un autre objectif de l'invention est de fournir un tel levier de commande qui soit de conception simple, sûre et rationnelle, peu encombrant et avec le moins de composants possible.

À cet effet, il a été mis au point un levier de commande monté pivotant autour d'une articulation dans une boîte de vitesses mécaniques d'un véhicule automobile à cinq rapports, dont un rapport de marche arrière située dans un même couloir qu'un rapport de cinquième vitesse.

Selon l'invention, le levier comprend un doigt disposé entre l'articulation et une extrémité opposée du levier, et destiné à s'engager dans une lumière lorsque ledit levier est pivoté pour sélectionner le couloir de la cinquième vitesse et de la marche arrière. Le doigt est déplaçable le long du levier et la lumière définit une piste étagée autorisant :
- soit le pivotement du levier pour passer la cinquième vitesse, correspondant à une position de butée du doigt dans laquelle le déplacement du doigt le long du levier est interdit ;
- soit le déplacement du doigt le long du levier pour permettre audit doigt de franchir l'étage de la piste et permettre le pivotement du levier pour passer la marche arrière.

De cette manière, avec le levier selon l'invention, un conducteur ne peut pas passer accidentellement la marche arrière en croyant passer la sixième vitesse, car pour ce faire, il doit agir sur le doigt pour le déplacer le long du levier et ainsi permettre le pivotement du levier pour passer la marche arrière. La sécurité d'utilisation est optimale car lorsque la cinquième vitesse est sélectionnée, la piste définie par la lumière interdit le déplacement du doigt le long du levier et donc le pivotement pour passer la marche arrière.

De plus, le fait que le doigt déplaçable soit situé entre l'articulation du levier et une extrémité opposée dudit levier permet de réduire l'encombrement du levier et de la boîte de vitesses.

Selon une forme de réalisation particulière, le doigt est assujetti à une gâchette dont l'actionnement, notamment par le conducteur, permet le déplacement du doigt le long du levier afin d'autoriser le passage de la marche arrière.

Selon une forme de réalisation particulière, de conception simple et au nombre de composants limité, le doigt est solidaire d'un collier monté coulissant autour du levier.

Avantageusement, la piste étagée est située dans un plan parallèle au couloir de la cinquième vitesse et de la marche arrière.

### DESCRIPTION SOMMAIRE DES FIGURES

D'autres avantages et caractéristiques ressortiront mieux de la description de l'invention qui va suivre, donnée à titre d'exemple non limitatif, à partir des dessins annexés dans lesquels :
- la figure 1 est une représentation schématique illustrant, en perspective, la partie inférieure d'un levier de commande d'une boîte de vitesses mécaniques, équipé d'un doigt destiné à s'engager dans une piste étagée pour le verrouillage de la marche arrière, le levier étant représenté en position point mort ;
- la figure 2 représenté la grille de sélection des vitesses, la position du levier indiquée étant celle de la figure 1 ;
- la figure 3 est une représentation schématique similaire à celle de la figure 1, le levier étant pivoté pour sélectionner le couloir de la cinquième vitesse et de la marche arrière ;
- la figure 4 représenté la grille de sélection des vitesses, la position du levier indiquée étant celle de la figure 3 ;
- la figure 5 est une représentation schématique similaire à celle de la figure 3, le levier étant pivoté pour passer la cinquième vitesse ;
- la figure 6 représenté la grille de sélection des vitesses, la position du levier indiquée étant celle de la figure 5 ;
- la figure 7 est une représentation schématique similaire à celle de la figure 3, le doigt étant déplacé le long du levier par l'actionnement d'une gâchette, et le levier étant pivoté pour passer la marche arrière ;
- la figure 8 représenté la grille de sélection des vitesses, la position du levier indiquée étant celle de la figure 7 ;

### DESCRIPTION DETAILLEE DE L'INVENTION

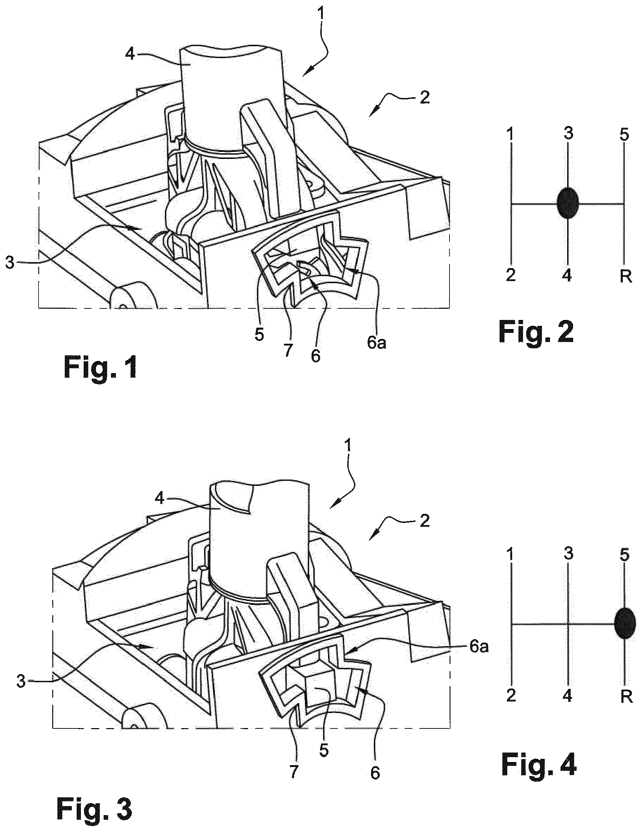

En référence aux figures 1 à 8, l'invention concerne un levier (1) de commande d'une boîte de vitesses mécaniques (2) d'un véhicule automobile à cinq rapports, dont notamment un rapport de cinquième vitesse située dans un même couloir qu'un rapport de marche arrière.

D'une manière connue, le levier (1) de commande est monté pivotant autour d'une articulation (3) lui permettant de sélectionner et de passer les différentes vitesses.

Selon l'invention, le levier (1) de commande comprend un collier (4) monté coulissant autour du levier (1). Pour ce faire, le collier (4) se prolonge, par exemple, au niveau de l'extrémité libre du levier (1) de commande, par une gâchette accessible par le conducteur pour déplacer ledit collier (4) le long du levier (1). Le collier (4) est également assujetti à un organe élastique pour le rappel en position initiale dudit collier (4). Selon une autre forme de réalisation, le collier (4) est assujetti à une gâchette indépendante, située au niveau de l'extrémité libre du levier (1) et, de la même manière, actionnable par le conducteur.

La position neutre du levier est illustrée aux figures 1 et 2. Le collier (4) comprend un doigt (5) faisant saillie latéralement, c'est-à-dire dans une direction orthogonale au plan du couloir de la marche arrière et de la cinquième vitesse, et destiné à verrouiller le pivotement du levier (1) lors du passage de la marche arrière.

À cet effet, et en référence aux figures 3 et 4, lorsque le levier (1) est pivoté pour sélectionner le couloir de la cinquième vitesse et de la marche arrière, ledit levier (1) s'engage dans une lumière (6) ménagée dans une paroi d'une partie fixe de la boîte des vitesses, parallèle au couloir de la cinquième vitesse et de la marche arrière.

La lumière (6) définit une piste étagée (6a) dans laquelle le doigt (5) est amené à se déplacer lors du pivotement du levier (1).

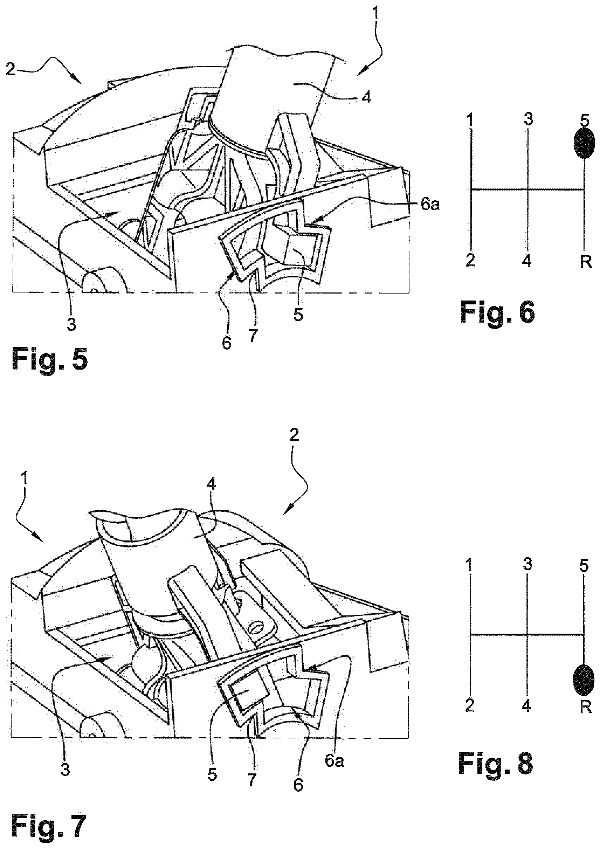

Selon l'invention, la piste étagée (6a), notamment en forme de « Z », est constituée d'une piste inférieure et d'une piste supérieure, décalées et positionnées l'une au-dessus de l'autre, et communicantes par leur extrémité en regard. La piste étagée (6a) autorise ainsi :
- en référence aux figures 5 et 6, soit le pivotement du levier (1) pour passer la cinquième vitesse, qui correspond au déplacement du doigt (5) dans la piste inférieure jusqu'à une position de butée du doigt (5) dans laquelle le déplacement du doigt (5) le long du levier (1), c'est-à-dire l'actionnement de la gâchette, est interdit ;
- en référence aux figures 7 et 8, soit le déplacement du doigt (5) le long du levier (1), c'est-à-dire l'actionnement de la gâchette, pour permettre au doigt (5) de franchir l'étage (7) de la piste (6a) et permettre ainsi le pivotement du levier (1) pour passer la marche arrière.

De cette manière, afin de passer la marche arrière, le conducteur doit actionner la gâchette pour permettre le pivotement du levier (1) en direction de la marche arrière, voir figures 7 et 8. Cependant, l'actionnement de la gâchette n'est autorisé que lorsque le levier (1) est retourné en positon neutre dans le couloir, c'est-à-dire entre la cinquième vitesse et la marche arrière, voir figures 3 et 4. La gâchette ne peut pas être actionnée tant que le levier (1) se trouve en position de cinquième vitesse, car la hauteur de la piste (6a) correspond sensiblement à l'épaisseur du doigt (5). Le passage accidentel de la marche arrière est donc évité, d'une manière simple, sûre et rationnelle, et peu encombrante car le doigt (5) est disposé entre l'articulation (3) du levier (1) et une extrémité opposée dudit levier (1).

## Revendications

1. Levier (1) de commande monté pivotant autour d'une articulation (3) dans une boîte de vitesses (2) mécaniques d'un véhicule automobile à cinq rapports, dont un rapport de marche arrière est situé dans un même couloir qu'un rapport de cinquième vitesse, où le levier (1) comprend un doigt (5) disposé entre l'articulation (3) et une extrémité opposée du levier (1), le doigt (5) étant destiné à s'engager dans une lumière (6) lorsque ledit levier (1) est pivoté pour sélectionner le couloir de la cinquième vitesse et de la marche arrière, le doigt (5) est déplaçable le long du levier (1) et la lumière (6) définit une piste étagée (6a) autorisant :
- soit le pivotement du levier (1) pour passer à la cinquième vitesse correspondant à une position de butée du doigt (5) dans laquelle le déplacement du doigt (5) le long du levier (1) est interdit ;
- soit le déplacement du doigt (5) le long du levier (1) pour permettre au doigt (5) de franchir un étage (7) de la piste étagée (6a) et permettre le pivotement du levier (1) pour passer à la marche arrière.

2. Levier (1) selon la revendication 1, ***caractérisé* en ce que** le doigt (5) est assujetti à une gâchette dont l'actionnement permet le déplacement du doigt (5) le long du levier (1).

3. Levier (1) selon la revendication 1, ***caractérisé* en ce que** le doigt (5) est solidaire d'un collier (4) monté coulissant autour du levier (1).

4. Levier (1) selon la revendication 1, ***caractérisé* en ce que** la piste étagée (6a) est située dans un plan parallèle au couloir de la cinquième vitesse et de la marche arrière.

## Patentansprüche

1. Ein Steuerhebel (1), der um ein Scharnier (3) in einem mechanischen Getriebe (2) eines Kraftfahrzeugs mit fünf Gängen schwenkbar montiert ist, wobei ein Rückwärtsgang im gleichen Gang wie ein fünfter Gang angeordnet ist, wobei der Hebel (1) einen Finger (5) aufweist, der zwischen dem Scharnier (3) und einem gegenüberliegenden Ende des Hebels (1) angeordnet ist, wobei der Finger (5) so angepasst ist, dass er in einen Schlitz (6) eingreift, wenn der Hebel (1) geschwenkt wird, um den fünften Gang und die Spur für den Rückwärtsgang zu wählen, wobei der Finger (5) entlang des Hebels (1) beweglich ist und der Schlitz (6) eine abgestufte Spur (6a) definiert, die :
- entweder den Hebel (1) zu schwenken, um in den fünften Gang zu schalten, der einer Anschlagstellung des Fingers (5) entspricht, in der eine Bewegung des Fingers (5) entlang des Hebels (1) verboten ist;
- oder das Bewegen des Fingers (5) entlang des Hebels (1), damit der Finger (5) eine Stufe (7) der abgestuften Bahn (6a) passieren kann und der Hebel (1) zum Rückwärtsschalten geschwenkt werden kann.

2. Hebel (1) nach Anspruch 1, **dadurch gekennzeichnet, dass** der Finger (5) an einem Abzug befestigt ist, dessen Betätigung die Bewegung des Fingers (5) entlang des Hebels (1) ermöglicht.

3. Hebel (1) nach Anspruch 1, **dadurch gekennzeichnet, dass** der Finger (5) mit einem Kragen (4) fest verbunden ist, der um den Hebel (1) herum gleitend montiert ist.

4. Hebel (1) nach Anspruch 1, **dadurch gekennzeichnet, dass** die gestufte Spur (6a) in einer Ebene parallel zum fünften Gang und zum Rückwärtsgangkorridor liegt.

## Claims

1. A control lever (1) pivotally mounted about a hinge (3) in a mechanical gearbox (2) of a motor vehicle with five gears, one reverse gear being located in the same corridor as a fifth gear, wherein the lever (1) comprises a finger (5) disposed between the hinge (3) and an opposite end of the lever (1), the finger (5) being adapted to engage a slot (6) when said lever (1) is pivoted to select the fifth gear and reverse gear lane, the finger (5) is movable along the lever (1) and the slot (6) defines a stepped track (6a) allowing :
- either pivoting the lever (1) to shift to the fifth gear corresponding to an abutment position of the finger (5) in which movement of the finger (5) along the lever (1) is prohibited;
- or moving the finger (5) along the lever (1) to allow the finger (5) to pass a step (7) of the stepped track (6a) and allowing the lever (1) to be pivoted to shift into reverse.

2. Lever (1) according to claim 1, **characterised in that** the finger (5) is secured to a trigger whose actuation allows the movement of the finger (5) along the lever (1).

3. Lever (1) according to claim 1, **characterised in that** the finger (5) is integral with a collar (4) mounted so as to slide around the lever (1)

4. Lever (1) according to claim 1, **characterised in that** the stepped track (6a) is located in a plane parallel to the fifth gear and reverse gear corridor.
